# FASCICULE DE BREVET EUROPEEN

(11) **EP 0 944 491 B1**
(45) Date de publication et mention de la délivrance du brevet: **18.07.2001**
(21) Numéro de dépôt: 97951281.1
(22) Date de dépôt: 09.12.1997
(51) Int. Cl.: B60P 7/08

(54) **LIAISON SOUPLE D'ARRIMAGE A UNE STRUCTURE PORTEUSE POUR CHACUNE DES ROUES D'UN VEHICULE ROUTIER CHARGE SUR UN MOYEN DE TRANSPORT**
ELASTISCHE VERBINDUNG AN EINEM TRAGWERK ZUM FESTHALTEN EINES JEDEN RADES DES AUF EIN TRANSPORTMITTEL GELADENEN STRASSENFAHRZEUGES
FLEXIBLE LINK FOR SECURING TO A CARRYING STRUCTURE EACH WHEEL OF A ROAD VEHICLE LOADED ON MEANS OF CONVEYANCE

(30) Priorité: 10.12.1996 FR 9615304
(43) Date de publication de la demande: 29.09.1999
(73) Titulaire: Lohr Industrie, 67980 Hangenbieten (FR)
(72) Inventeur: ANDRE, Jean-Luc, F-67210 Obernai (FR)
(74) Mandataire: Metz, Paul
(86) Numéro de dépôt international: FR9702241
(87) Numéro de publication internationale: WO9825795

(56) Documents cités:
- US-A- 5 108 237

## Description

L'invention se rapporte à une sangle d'arrimage pour l'immobilisation d'une roue d'un véhicule routier sur une structure porteuse pendant son transport.

On connait déjà plusieurs variétés de sangles d'arrimage prévues au même but d'immobilisation d'un véhicule par ses roues sur une structure porteuse.

Il s'agit d'abord des sangles classiques présentant des structures de blocage directement en sous-face.

L'utilisation de ces sangles est devenue mineure en raison des détériorations qu'elles peuvent occasionner à la bande de roulement du pneu.

Lors de la mise en tension de la sangle, les structures de blocage ripent sur le pneu et l'endommagent.

On connaît ensuite les sangles d'arrimage à patins. La sangle porte sur le pneu par l'intermédiaire de plusieurs patins antidérapants dont les sous-faces sont conformées en structures de blocage. La sangle coulisse sur la face supérieure lisse des patins lors de sa mise en tension.

Lors de ces mouvements, les patins restent immobiles et on a ainsi supprimé l'inconvénient principal des premières sangles qui risquaient d'endommager le pneu par le déplacement forcé des structures de blocage sous contrainte d'une force de pression.

Ces dernières sangles ne sont pas cependant dépourvues d'inconvénients. En effet, la présence des patins rend la pose de la sangle plus difficile car pour bien les placer on doit se servir des deux mains. Or, le bon emplacement des patins est primordial car non convenablement placés ils risquent de ne plus assurer leur fonction.

De plus, la force d'appui des patins provenant de la tension de la sangle provoque une incrustation verticale du patin qui, sur certains pneus à sculpture saillante, risque d'endommager les reliefs voisins apportant au pneu des défauts de régularité géométrique. Ces détériorations peuvent engendrer des vibrations difficiles, voire impossibles à supprimer.

Or, s'agissant pour la majorité de roues de voitures neuves, et pour certaines de démonstration, ces ennuis rejaillissent sur l'estime de la marque dans l'esprit du consommateur.

L'invention décrite dans le brevet américain US 5,108,237 ZANKICH concerne une sangle d'arrimage portant des éléments transversaux d'appui sur le pneu du genre patins. Ces éléments transversaux sont montés libres en coulissement le long de la sangle entre deux butées.

Ces butées délimitent pour chaque patin une longueur de coulissement dont la valeur est en relation avec la longueur de déplacement de la sangle entre la pose sur le pneu et la fin de la mise en tension lors de l'arrimage.

Le but de cette invention consiste à réaliser un appui fixe sur le pneu tout en permettant le déplacement de mise en tension de la sangle autour du pneu.

Cette solution nécessite l'emploi de patins conformés en sous-face selon des reliefs de portée par exemple en forme de pointes situées en zone médiane de cette sous-face.

Par ailleurs, le contact d'appui est fixe et déterminé en ce qui concerne son emplacement dès la pose de la sangle. Ce contact d'appui ne peut donc bouger et de ce fait la pose de la sangle nécessite un soin particulier pour éviter que l'un des reliefs de sous-face d'un patin se trouve en face d'une cavité de la sculpture du pneu.

L'invention a pour but de supprimer l'ensemble des inconvénients ci-dessus.

A cet effet, elle se rapporte à une liaison souple d'arrimage à une structure porteuse d'un moyen de transport pour chacune des roues d'un véhicule routier, liaison se composant d'une sangle portant des structures d'immobilisation en contact d'appui avec la bande de roulement du pneu, et étant tendue entre deux points fixes pour porter sur le pneu en forçant en appui les structures d'immobilisation contre le pneu, caractérisée en ce que les structures d'immobilisation sont des éléments transversaux d'appui portés et maintenus parallèles entre eux et libres en mouvement de rotation sur eux-mêmes par la sangle, les extrémités des éléments transversaux d'appui font saillie transversalement de part et d'autre de la sangle, ces éléments transversaux sont en contact d'appui avec la bande de roulement du pneu par leurs extrémités faisant saillie transversalement de part et d'autre de la sangle.

La majorité des nombreux avantages de l'invention peuvent être énoncés comme suit :
. on supprime toute détérioration ou déformation du pneu par une mise en appui effectuée par roulement des éléments d'appui sur eux-mêmes ;
. la pose de la sangle ne requiert aucune adresse particulière. Les phases de mise en place et en tension sont simples, rapides et peuvent être effectuées d'une seule main ;
. les formes des éléments d'appui sont simples à réaliser et les caractéristiques mécaniques d'une matière plastique de base suffisent à transmettre sans dommage la force d'appui nécessaire ;
. les structures d'appui sont amovibles, permettant d'interchanger la pièce en cas de détérioration ou de la substituer par une forme différente appropriée à des pneus spéciaux ou à d'autres usages ;
. la flexion de la tige des éléments transversaux d'appui sous l'effet de la tension de la sangle améliore le maintien latéral ;
. la constitution en deux bandes de la sangle permet à la bande supérieure seule de subir la tension.

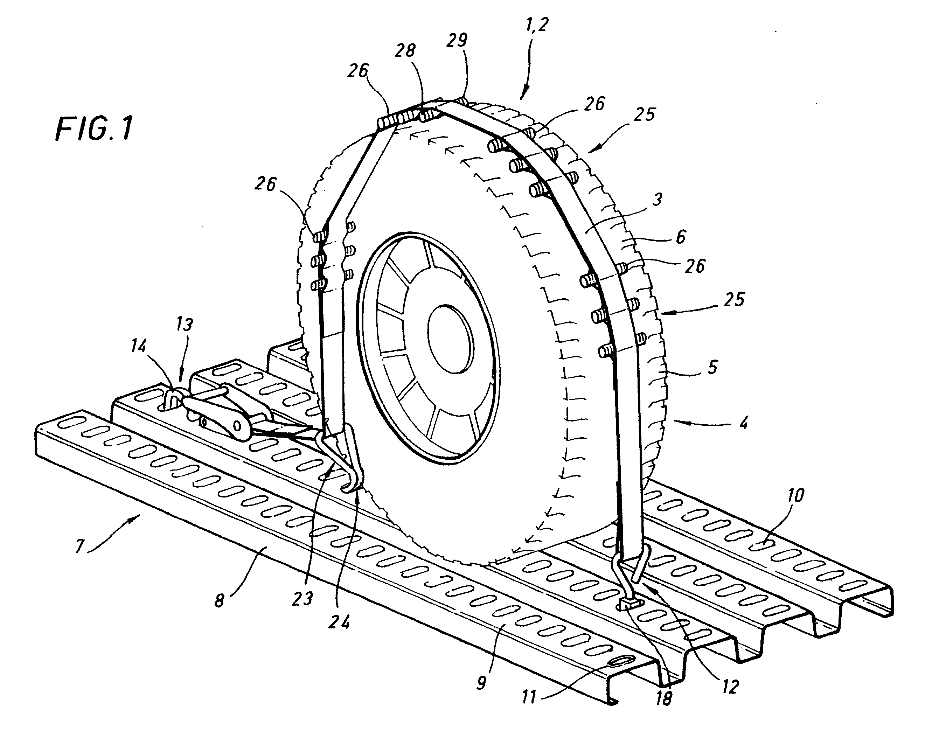

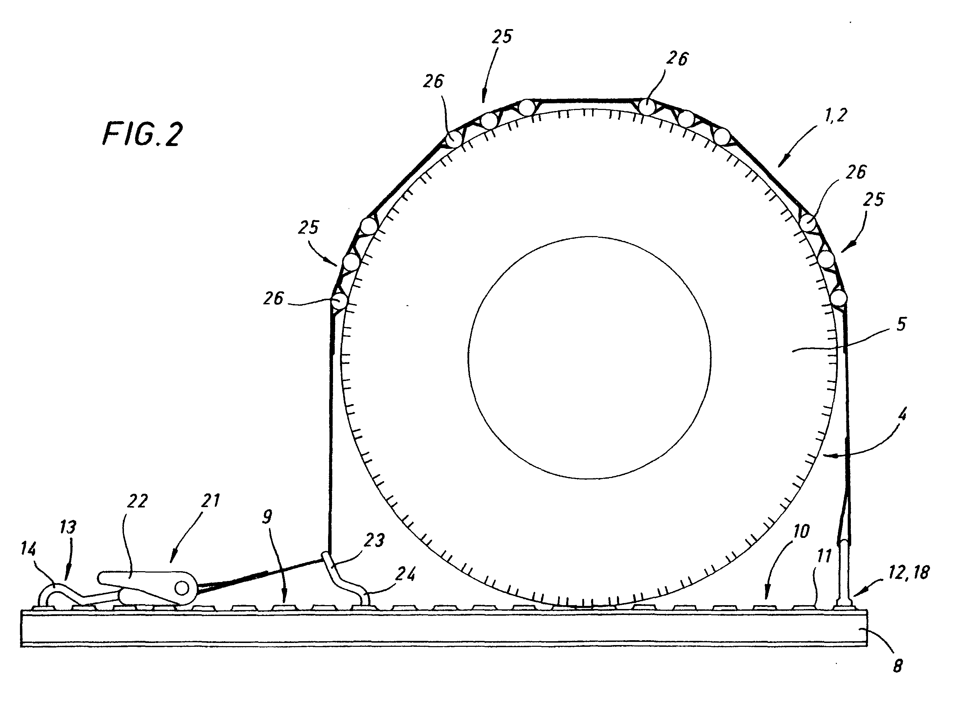

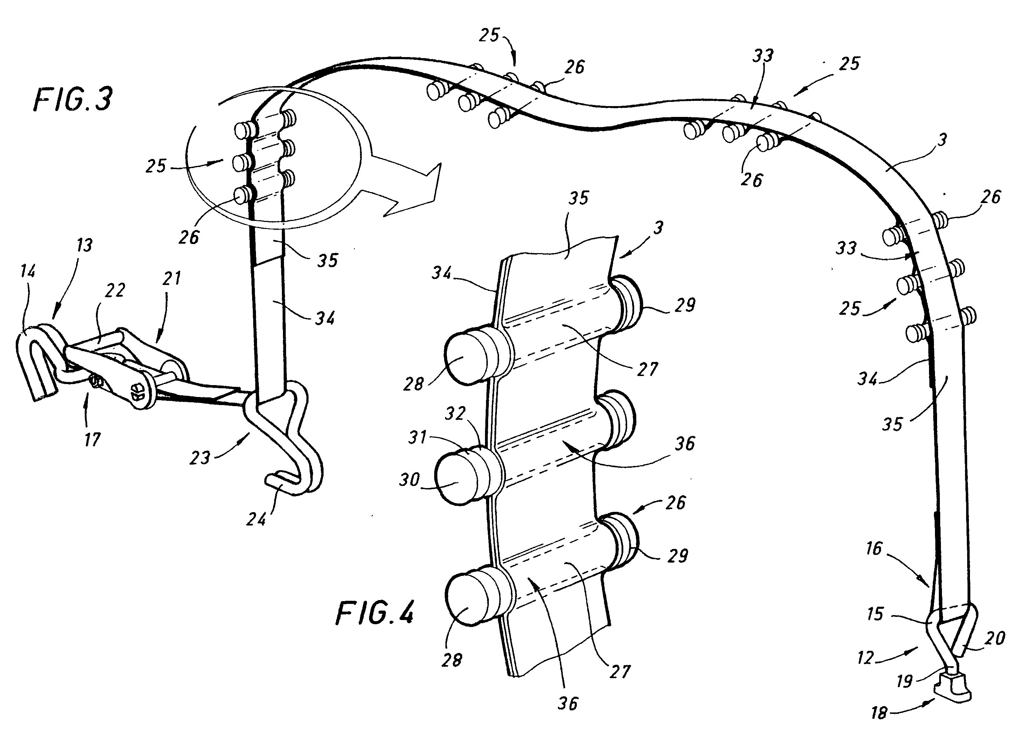

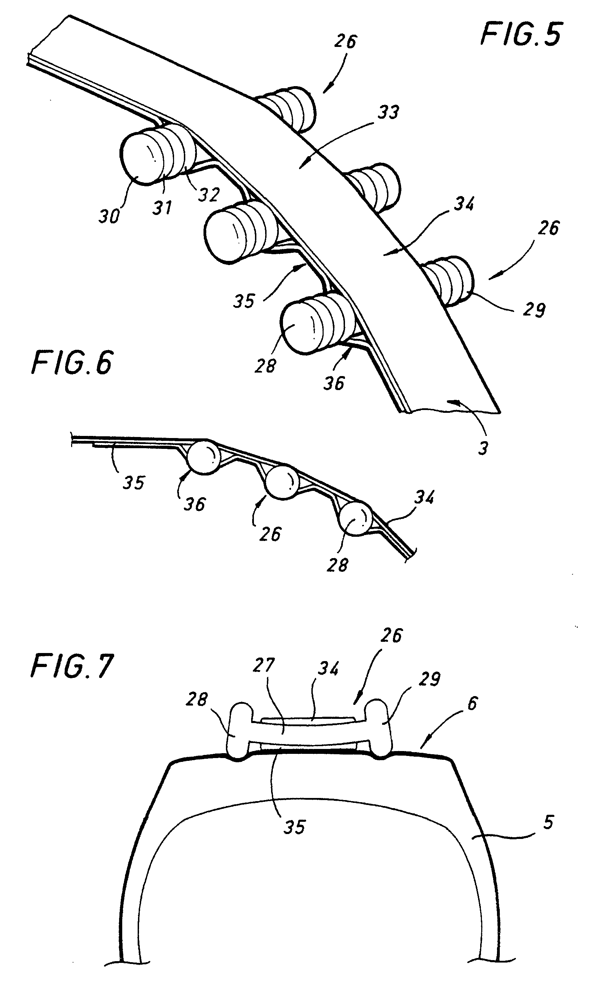

D'autres caractéristiques et avantages de l'invention apparaîtront dans la description qui suit, donnée à titre d'exemple et accompagnée des dessins qui représentent :
. la figure 1 : une vue en perspective montrant la sangle en place et tendue sur le pneu d'une roue ;
. la figure 2 : une vue de profil d'un arrimage type d'une roue de véhicule routier ;
. la figure 3 : une vue en perspective de l'ensemble de la sangle avec ses fixations :
. les figures 4 et 5 : des vues de détail en perspective agrandie d'une partie de la sangle correspondant à un groupe d'éléments transversaux d'appui, respectivement de la face intérieure et de la face extérieure de la sangle ;
. la figure 6 : une vue de profil de la partie agrandie correspondant aux figures 4 et 5 ;
. la figure 7 : une coupe schématique transversale de la sangle en tension sur un pneu à travers un élément transversal d'appui.

La sangle 1 selon l'invention est une liaison souple 2, par exemple une bande 3 double ou localement doublée en matière textile, destinée à arrimer une roue 4 d'un véhicule par appui d'immobilisation sur son pneu 5 présentant une bande de roulement 6 en vue d'une aide au maintien du véhicule sur une structure porteuse 7 d'un moyen de transport.

A titre d'exemple, la structure porteuse présente un plan porteur ou un platelage 8 en tôle perforée 9 plane ou conformée en onde carrée ou rectangulaire. La tôle perforée 9 comporte sur sa ou sur ses faces porteuses des perforations oblongues telles que 10 à bords 11 pleins ou retroussés disposées en suites linéaires et utilisées comme points d'ancrage pour les pièces de fixation ou d'ancrage des extrémités de la sangle ou pour l'élément intermédiaire de renvoi.

Les pièces d'ancrage 12, 13 des extrémités de la sangle sont réalisées par exemple sous la forme d'un crochet métallique dont chaque extrémité courbée 14 vient se loger dans une perforation 10 de la structure porteuse 7 et dont l'autre extrémité présente une partie transversale 15 sur laquelle l'extrémité de la sangle est montée pivotante par l'intermédiaire par exemple d'une boucle de retour d'extrémité 16, 17.

A titre de variante, on peut envisager de remplacer le premier ou les deux crochets d'extrémité par un plot de retenue 18 (figure 3) de section identique à la forme des perforations mais de dimensions légèrement inférieures de manière à venir s'engager dans l'ouverture de la perforation et après un quart de tour constituer un point d'ancrage. Le plot de retenue 18 est relié de façon pivotante à une tige de liaison 19 prolongée par une extrémité triangulaire 20 dans laquelle passe la boucle 16 d'extrémité de la sangle.

Comme représenté sur les figures 2 et 3, ce type d'ancrage sera de préférence utilisé pour la première extrémité de la sangle située sur la partie droite de ces figures.

La sangle comporte sur sa partie terminale opposée à sa première extrémité un dispositif manuel de mise en tension, par exemple à cliquet 21 avec poignée de manoeuvre 22.

Cette même partie terminale est rabattue vers le bas et contre le pneu par un anneau de renvoi 23 ancré par un crochet 24 dans une perforation 9 adjacente et sur lequel glisse la sangle afin que la portion terminale vers la deuxième extrémité présente une configuration en ligne brisée rabattue vers le bas et passant au plus près du pneu, permettant à la sangle de rester en contact avec le pneu sur une plus grande longueur (figure 2).

En vue d'améliorer l'immobilisation du pneu, la sangle selon l'invention comporte sur sa longueur utile un ou plusieurs groupes 25 comportant chacun une pluralité d'éléments transversaux d'appui tels que 26 maintenus parallèles et reliés entre eux par la sangle spécialement aménagée au droit de ces éléments transversaux d'appui comme on le verra ci-après.

Ces derniers peuvent affecter diverses formes techniques et être maintenus par la sangle de différentes façons.

La forme représentée sur les dessins constitue la variante préférée.

Il s'agit d'éléments rectilignes en forme générale de rouleau à partie centrale en forme de tige 27 terminée de chaque côté par des extrémités identiques élargies 28, 29 présentant une structure cylindrique annelée mono ou multiples anneau(x) par exemple deux ou trois 30, 31, 32 de diamètre supérieur à celui de la partie centrale conformée en tige.

Cette conformation procure aux éléments transversaux d'appui une allure générale en forme d'haltère.

Cette structure annelée permet de réaliser de chaque côté de chaque rouleau une zone de portée selon un appui simple ou multiple par un ou plusieurs traits de contact parallèles et longitudinaux au niveau de chacune des extrémités élargies 28, 29.

Cette succession parallèle de stries annulaires que forment les extrémités des rouleaux assure une meilleure tenue latérale de la sangle sur le pneu par rapport aux efforts latéraux auxquels est soumise la charge transportée, par exemple dans les virages. Les formes arrondies de périphérie et de section de chacune des extrémités élargies 28, 29 des rouleaux procurent une pression de contact par roulement lors de la mise en tension de la sangle. On peut éviter ainsi toute blessure au pneu ou déformation de ses sculptures et améliorer le contact d'immobilisation.

Au lieu de riper sur la bande de roulement ou de se trouver forcés en un seul endroit contre le pneu, les éléments transversaux d'appui 26 assurent la fonction de galet de pression qui sont pressés progressivement contre le pneu pendant leur mouvement de déplacement-roulement résultant de la mise en tension de la sangle.

Ainsi, plus aucune détérioration par glissement ou par ripage ne peut se produire.

Les éléments transversaux d'appui 26 peuvent être rassemblés en plusieurs groupes répétitifs 25 à intervalle constants 33 l'un de l'autre ou se présenter en une suite régulière à intervalles constants sur toute la longueur utile de la sangle.

Pour des besoins particuliers, on peut envisager de faire varier l'intervalle 33 entre les éléments transversaux d'appui, par exemple un petit intervalle en partie centrale et un intervalle plus grand aux extrémités de la longueur utile de la sangle.

De façon préférentielle, la sangle est constituée de deux bandes superposées par exemple en matière textile rapportées l'une sur l'autre et fixées l'une à l'autre par exemple par couture. On distingue une bande supérieure de tension 34 et une bande inférieure de maintien 35 des éléments transversaux d'appui 26.

La bande inférieure de maintien 35 peut être continue sur toute la longueur de la bande supérieure de tension 34 ou exister uniquement dans les zones de présence des éléments transversaux d'appui 26 ou même n'exister que par tronçons au voisinage de chacun des éléments transversaux d'appui.

Le maintien est assuré par une boucle telle que 36 de bande ou de portion de bande inférieure venant entourer partiellement la tige 27 de chaque élément transversal d'appui 26, l'autre partie de la tige 27 étant recouverte par la bande supérieure de tension 34.

Pour améliorer le maintien des éléments transversaux d'appui 26, chaque boucle 36 portant un élément transversal d'appui est délimitée par deux coutures transversales parallèles le long de la partie centrale en tige 27 de part et d'autre de celle-ci.

Ainsi, les éléments transversaux d'appui 26 sont toujours situés sous la bande supérieure de tension 34, ce qui permet un meilleur travail de maintien et d'appui de cette bande supérieure.

La figure 7 montre le travail de flexion de la tige 27 de chaque élément transversal d'appui 26 et le léger mouvement d'écartement en biais de leurs extrémités 28,29 lorsque ces éléments sont soumis à une force d'appui provenant de la mise en tension de la sangle.

En raison de la plasticité de la matière dans laquelle sont formés les éléments transversaux d'appui 26, ceux-ci se déformeront de la façon représentée sur la figure 7. La flexion de la tige 27 se reportera comme une force d'appui sur le pneu à travers la bande inférieure de maintien 35 et la déformation en écartement de biais des extrémités 28, 29 permettra d'améliorer l'assise de l'ensemble.

Les enfoncements locaux correspondants au niveau de la tige 27 et des extrémités des éléments transversaux d'appui, augmenteront la surface de contact avec le pneu, ce qui aura pour effet d'améliorer le maintien latéral.

## Revendications

1. Liaison souple (2) d'arrimage à une structure porteuse (7) d'un véhicule routier par au moins l'une de ses roues (4), liaison se composant d'une sangle (1) portant des structures d'immobilisation sous la forme d'éléments transversaux (26) à surface de contact d'appui avec la bande de roulement (6) du pneu (5) équipant la roue (4), les extrémités (28,29) de ces éléments transversaux (26) faisant saillie transversalement de part et d'autre de la sangle (1) qui est tendue entre deux points fixes pour porter sur le pneu (5) en forçant en appui les structures d'immobilisation contre le pneu (5),
caractérisée en ce que :
. les éléments transversaux d'appui (26) portés par la sangle (1) sont libres en mouvement de rotation sur eux-mêmes et portent par leurs extrémités (28,29) en contact d'appui sur le pneu (5) ;
. ces éléments transversaux d'appui (26) sont en contact d'appui avec la bande de roulement du pneu par leurs extrémités (28,29) faisant saillie transversalement de part et d'autre de la sangle.

2. Liaison d'arrimage selon la revendication 1, caractérisée en ce que la partie centrale des éléments transversaux d'appui (26) est rectiligne et cylindrique en forme de tige (27) et les extrémités (28,29) faisant saillie transversalement sont de forme générale cylindrique et de section supérieure à celle de la partie centrale.

3. Liaison d'arrimage selon la revendication précédente, caractérisée en ce que les extrémités (28,29) sont identiques.

4. Liaison d'arrimage selon la revendication précédente, caractérisée en ce que les extrémités (28,29) sont conformées en structures annelées.

5. Liaison d'arrimage selon l'une quelconque des revendications précédentes caractérisée en ce que les éléments transversaux d'appui (26) sont maintenus parallèles entre eux par la sangle (1).

6. Liaison d'arrimage selon les revendications 1 et 2, caractérisée en ce que la sangle est formée de deux bandes, une bande supérieure de tension (34) et. une bande inférieure de maintien (35) entourant les tiges (27) des éléments de maintien (26) sur une partie de leur surface latérale par une boucle (36), l'autre partie étant recouverte par la bande supérieure de tension (34).

7. Liaison d'arrimage selon la revendication précédente, caractérisée en ce que la bande inférieure de maintien (35) est rapportée sur la bande supérieure de tension (34) au voisinage des éléments transversaux d'appui (26).

8. Liaison d'arrimage selon l'une quelconque des revendications précédentes, caractérisée en ce que les éléments transversaux d'appui (26) sont répartis en plusieurs groupes (25) à l'intérieur desquels ils sont disposés à intervalle constant l'un de l'autre.

9. Liaison d'arrimage selon l'une quelconque des revendications précédentes de 1 à 7, caractérisée en ce que les éléments transversaux d'appui (26) sont répartis uniformément sur toute la longueur utile de la sangle (1).

## Patentansprüche

1. Flexible Zurrverbindung (2) eines Straßenfahrzeugs mittels wenigstens einem seiner Räder (4) an einer Tragstruktur (7), umfassend einen Riemen (1), der Immobilisierungsstrukturen in Form von zur Kontaktfläche transversalen Elementen (26) zum Andrücken an die Lauffläche (6) des Reifens (5), mit dem das Rad (4) ausgestattet ist, aufweist, wobei die Enden (28, 29) dieser transversalen Elemente (26) transversal beiderseits des Riemens (1), der zwischen zwei Festpunkten gespannt ist, überstehen, um auf den Reifen (5) zu wirken, indem er die Immobilisierungsstrukturen gegen den Reifen (5) drückt, dadurch gekennzeichnet, daß:
- die von dem Riemen (1) getragenen transversalen Andrückelemente (26) um sich selbst frei drehbar sind und mit ihren Enden (28, 29) in Druckkontakt auf den Reifen (5) einwirken;
- die transversalen Andrückelemente (26) mit der Lauffläche des Reifens über ihre Enden (28, 29) in Druckkontakt stehen, die transversal beiderseits des Riemens überstehen.

2. Zurrverbindung nach Anspruch 1, dadurch gekennzeichnet, daß der mittlere Bereich der transversalen Andrückelemente (26) geradlinig und zylindrisch in Form eines Stiftes (27) ist, und daß die transversal überstehenden Enden (28, 29) von im allgemeinen zylindrischer Form und größerem Durchmesser als dem des mittleren Bereichs sind.

3. Zurrverbindung nach dem vorangehenden Anspruch, dadurch gekennzeichnet, daß die Enden (28, 29) identisch sind.

4. Zurrverbindung nach dem vorangehenden Anspruch, dadurch gekennzeichnet, daß die Enden (28, 29) als gerillte Strukturen ausgebildet sind.

5. Zurrverbindung nach einem der vorangehenden Ansprüche,
dadurch gekennzeichnet, daß die transversalen Andrückelemente (26) vom Riemen (1) parallel zueinander gehalten sind.

6. Zurrverbindung nach den Ansprüchen 1 und 2, dadurch gekennzeichnet, daß der Riemen aus zwei Bändern gebildet ist, einem oberen Spannband (34) und einem unteren Halteband (35), das die Stifte (27) der Halteelemente (26) auf einem Bereich ihrer Seitenfläche mit einer Schlaufe (36) umschlingen, wobei der andere Bereich von dem oberen Spannband (34) abgedeckt ist.

7. Zurrverbindung nach dem vorangehenden Anspruch, dadurch gekennzeichnet, daß das untere Halteband (35) in der Nähe der transversalen Andrückelemente (26) an das obere Spannband (34) angefügt ist.

8. Zurrverbindung nach einem der vorangehenden Ansprüche,
dadurch gekennzeichnet, daß die transversalen Andrückelemente (26) in mehrere Gruppen (25) aufgeteilt sind, in denen sie in einem konstanten Abstand voneinander angeordnet sind.

9. Zurrverbindung nach einem der vorangehenden Ansprüche 1 bis 7, dadurch gekennzeichnet, daß die transversalen Andrückelemente (26) gleichförmig über die gesamte Nutzlänge des Riemens (1) verteilt sind.

## Claims

1. A flexible security link (2) for securing a vehicle by at least one of its wheels (4) to a carrying surface (7), said link comprising a strap (1) holding immobilizing structures in the form of transverse elements (26) which contact the tread (6) of the tire (5) mounted on the wheel (4), the extremities (28, 29) of said transverse elements (26) projecting transversely on either side of the strap (1) which extends between two fixed points to contact the tire (5), forcing the immobilizing structures against the tire (5), wherein :
• the transverse support elements (26) held by the strap (1) rotate freely on themselves and their extremities (28, 29) contact the tire (5) ;
• said transverse support elements (26) contact the tire tread at their extremities, which project transversely on either side of the strap.

2. The security link according to claim 1, characterised in that the central portion of the transverse support elements (26) is rectilinear and shaped like a cylindrical rod (27), and the transversely projecting extremities (28, 29) are generally cylindrical and larger in section than the central portion.

3. The security link according to the preceding claim, characterised in that the extremities (28, 29) are identical.

4. The security link according to the preceding claim, characterised in that the extremities (28, 29) are ringed structures.

5. The security link according to one of the preceding claims, characterised in that the transverse support elements (26) are maintained parallel to each other by the strap (1).

6. The security link according to claims 1 and 2, characterised in that the strap is formed of two bands, an upper tension band (34) and a lower maintenance band (35) forming a loop (36) which surrounds a portion of the lateral surface of the rods (27) of the support elements (26), the other portion being covered by the upper tension band (34).

7. The security link according to the preceding claim, characterised in that the lower maintenance band (35) is joined to the upper tension band (34) near the transverse support elements (26).

8. The security link according to one of the preceding claims, characterised in that the transverse support elements (26) are divided into several groups (25) and that the elements are separated from each other by a constant interval inside these groups.

9. The security link according to one of the preceding claims, characterised in that the transverse support elements (26) are spaced uniformly along the entire utility service of the strap (1).
